# EUROPEAN PATENT APPLICATION

(11) **EP 4 738 570 A1**
(43) Date of publication of application: **06.05.2026**
(21) Application number: 24845930.7
(22) Date of filing: 18.07.2024
(51) Int. Cl.: H01M 50/242, H01M 50/502, H01M 50/249

(54) **BUS BAR SUPPORT BRACKET, BATTERY PACK APPLYING SAME, AND VEHICLE EQUIPPED WITH SAME**

(30) Priority: 27.07.2023 KR 20230098448
(71) Applicant: Valeo Kapec Co., Ltd., Daegu 42709 (KR)
(72) Inventor: JEON, Seung-Joon, Daegu 42709 (KR); LEE, Seong-Eun, Daegu 42709 (KR)
(74) Representative: Isarpatent
(86) International application number: PCT/KR2024/010390
(87) International publication number: WO 2025/023628

(57) **Abstract**

Provided are: a bracket for supporting a plurality of long bus bars so that the plurality of long bus bars can be stably arranged side by side in a narrow battery pack space while maintaining insulation; a battery pack to which the bracket is applied; and a vehicle equipped with the battery pack. The support bracket comprises: a bus bar receiving space; a pair of side walls for shielding both sides of the bus bar receiving space; a bottom wall connecting the pair of side walls; an isolation wall extending from the bottom wall between the pair of side walls and dividing the bus bar receiving space into one side space and the other side space; and a plurality of fixing members for fixing the support bracket to a position to which the support bracket is to be fixed.

## Description

### [Technical Field]

This application claims priority to and the benefit of Korean Patent Application No. 10-2023-0098448 filed with the Korean Intellectual Property Office on July 27, 2023, the entire contents of which are incorporated herein by reference.

The present disclosure relates to a support bracket for fixing a bus bar of a battery pack for a vehicle, and more particularly, to a bracket capable of supporting a plurality of long bus bars so that the plurality of bus bars may be stably disposed side by side in a narrow space in a battery pack in a state in which insulation is maintained, a battery pack to which the bracket is applied, and a vehicle equipped with the battery pack.

### [Background Art]

A battery pack for a vehicle is preferably light in weight in order to improve energy consumption efficiency relative to a movement distance. Further, the battery pack for a vehicle preferably has a high energy capacity in order to further extend the mileage of a vehicle. In addition, the battery pack for a vehicle needs to be equipped with a safety device that may delay thermal runaway and prevent explosion even though the battery pack is damaged in the event of an accident, such as a vehicle collision.

Therefore, during a process of designing the battery pack, designing processes, such as a process of selecting a material having excellent strength relative to weight, a process of designing a structure for ensuring strength, a process of controlling and designing a temperature of the battery pack, and a process of designing integrated arrangement of a battery cell or a battery module, are performed from various points of view.

In this case, bus bars for electrically connecting battery modules and bus bars for outputting electric power to the outside of the battery pack are densely disposed in the battery pack. Unlike general vehicles, a bus bar of a battery pack of an electric vehicle transmits a high voltage and a high current, and as a result, insulation is essential.

Because of the nature of the battery pack mounted in the vehicle, the bus bar is consistently exposed to impact and vibration. As a result, it cannot be assured that the insulated state of the bus bar is consistently maintained only by applying an insulation coating to a surface of the bus bar. In particular, because the bus bars for electrically connecting the battery modules disposed distantly and the bus bars for outputting electric power to the outside of the battery pack are very long, a reliable insulation structure needs to be essentially provided between the plurality of bus bars in a structure in which the plurality of bus bars are disposed side by side and adjacent to one another.

### [Disclosure]

### [Technical Problem]

The present disclosure has been made in an effort to solve the above-mentioned problem, and an object of the present disclosure is to provide a bracket capable of supporting long bus bars, which are required to be insulated from one another, so that the bus bars are not deformed or swayed by the weight of the bus bars or the operation of a vehicle when the bus bars are disposed side by side in a narrow, long space in a battery pack, a battery pack structure to which the bracket is applied, and a vehicle equipped with the battery pack structure.

In addition, another object of the present disclosure is to provide a bracket capable of assuredly maintaining insulation of a plurality of bus bars elongated and disposed in a narrow space, a battery pack structure to which the bracket is applied, and a vehicle equipped with the battery pack structure.

In addition, another object of the present disclosure is to provide a support bracket capable of being assembled so that a plurality of elongated bus bars are easily disposed in a narrow space, a battery pack structure to which the support bracket is applied, and a vehicle equipped with the battery pack structure.

In addition, another object of the present disclosure is to provide a support bracket having a structure capable of being conveniently installed while occupying a minimum space in a narrow space because of a plurality of bus bars elongated and disposed, a battery pack structure to which the support bracket is applied, and a vehicle equipped with the battery pack structure.

In addition, another object of the present disclosure is to provide a support bracket that may be stably mounted in a narrow space while occupying a minimum space in the space and has a lightweight, high-rigidity structure, a battery pack structure to which the support bracket is applied, and a vehicle equipped with the battery pack structure.

The technical objects of the present disclosure are not limited to the above-mentioned objects, and other objects and advantages of the present disclosure, which are not mentioned above, may be understood from the following descriptions and more clearly understood from the embodiment of the present disclosure. In addition, it can be easily understood that the objects and advantages of the present disclosure may be realized by means defined in the claims and a combination thereof.

### [Technical Solution]

In order to achieve the above-mentioned object, a support bracket according to the present disclosure supports a plurality of bus bars extending in a first direction in order to maintain a state in which the plurality of bus bars are disposed side by side and spaced apart from one another in a second direction intersecting the first direction.

The first direction may be a longitudinal direction of the bus bar or a forward/rearward direction of a battery pack in which the support bracket is installed, and the second direction may be a leftward/rightward direction or a leftward/rightward direction of the battery pack in which the support bracket is installed.

The support bracket provides a bus bar accommodation space extending in the first direction and opened toward one side based on a third direction intersecting both the first direction and the second direction.

The third direction may be an upward/downward direction or a vertical direction or a height direction of the battery pack in which the support bracket is installed.

The support bracket includes a pair of side walls respectively disposed at one side and the other side of the bus bar accommodation space based on the second direction, extending in the third direction, and configured to block two opposite sides of the bus bar accommodation space based on the second direction.

The support bracket includes a bottom wall disposed at the other side of the bus bar accommodation space based on the third direction, extending in the second direction, and configured to connect the pair of side walls.

The support bracket includes an isolation wall disposed between the pair of side walls, extending from the bottom wall toward one side based on the third direction, and configured to divide the bus bar accommodation space into one side space and the other side space based on the second direction.

The support bracket includes a fixing member configured to fix the support bracket at a position at which the support bracket is to be fixed.

The support bracket may be used singly. Alternatively, two or more support brackets may be stacked in the third direction and used.

The support brackets, which are stacked and used, may include the above-mentioned components. The support brackets may have different shapes.

The plurality of fixing members may be provided at different positions.

The plurality of fixing members may be disposed to be spaced apart from one another in at least any one of the first direction or the second direction.

The plurality of fixing members may be provided as four fixing members, the two fixing members may be aligned in the second direction, and the two fixing members may be aligned in the first direction.

The fixing member may be connected to an outer side of the side wall based on the second direction.

The fixing member may be connected to the other side of the bottom wall based on the third direction.

The fixing member may include a hook member extending toward the other side based on the third direction. Therefore, a structure, which is fastened to the hook member by being caught by the hook member, may be provided at a position at which the support bracket is to be fixed.

The side wall may be further provided with an extension side wall extending toward the other side based on the third direction further than the bottom wall, and a space between the pair of extension side walls in the second direction may define an additional bus bar accommodation space. That is, the bus bar may also be disposed on the lower portion of the bottom wall of the support bracket.

A partition protrusion protruding from the bottom wall toward the other side based on the third direction may be provided at a position corresponding to the isolation wall in the second direction, and the partition protrusion may divide the additional bus bar accommodation space into one side space and the other side space based on the second direction.

An extension length of the isolation wall in the third direction may be 0.5 times or more and 1.0 times or less an extension length of the side wall in the third direction.

The extension length of the isolation wall in the third direction may be 1.0 times or more and 1.5 times or less the extension length of the side wall in the third direction.

An extension length of the partition protrusion in the third direction may be 0.1 time or more and 0.5 times or less an extension length of the extension side wall in the third direction.

A length by which the isolation wall extends in the first direction may be shorter than a length by which the side wall extends in the first direction.

A length of the isolation wall in the first direction may be 1/3 or more and 2/3 or less of a length of the side wall in the first direction.

Extension isolation walls, which protrude from the bottom wall toward one side based on the third direction and are connected to the isolation wall in the first direction, may be provided at one side and the other side of the isolation wall based on the first direction.

An extension length of the extension isolation wall in the third direction may be shorter than an extension length of the isolation wall in the third direction.

The present disclosure may provide a battery pack to which the support bracket is applied, and a vehicle equipped with the battery pack.

The present disclosure provides a battery pack including: a base plate extending in a first direction and a second direction; a reinforcement beam member protruding toward one side based on a third direction, installed on the base plate, and extending in the first direction; a plurality of bus bars extending in the first direction and accommodated in the reinforcement beam member; and a first support bracket configured to support a plurality of bus bars in order to maintain a state in which the plurality of bus bars are disposed side by side and spaced apart from one another in the second direction in a state in which the plurality of bus bars are accommodated in the reinforcement beam member.

The first support bracket provides a first bus bar accommodation space extending in the first direction and opened toward one side based on the third direction.

The first support bracket is provided with a pair of side walls respectively disposed at one side and the other side of the first bus bar accommodation space based on the second direction, extending in the third direction, and configured to block two opposite sides of the first bus bar accommodation space based on the second direction.

The first support bracket is provided with a bottom wall disposed at the other side of the first bus bar accommodation space based on the third direction, extending in the second direction, and configured to connect the pair of side walls.

The first support bracket is provided with an isolation wall disposed between the pair of side walls, extending from the bottom wall toward one side based on the third direction, and configured to divide the first bus bar accommodation space into one side space and the other side space based on the second direction.

The first support bracket includes a fixing member configured to fix the first support bracket to the reinforcement beam member.

The first support bracket may be used singly in the third direction.

The first support bracket may be used in a shape in which the first support bracket is stacked on the second support bracket in the third direction.

The second support bracket may be disposed at one side or the other side of the first support bracket based on the third direction.

The second support bracket may support the plurality of bus bars in order to maintain a state in which the plurality of bus bars are disposed side by side and spaced apart from one another in the second direction in a state in which the plurality of bus bars are accommodated in the reinforcement beam member.

The second support bracket may provide a second bus bar accommodation space extending in the first direction and opened toward one side based on the third direction.

The second support bracket may be provided with a pair of side walls respectively disposed at one side and the other side of the second bus bar accommodation space based on the second direction, extending in the third direction, and configured to block two opposite sides of the second bus bar accommodation space based on the second direction.

The second support bracket may be provided with a bottom wall disposed at the other side of the second bus bar accommodation space based on the third direction, extending in the second direction, and configured to connect the pair of side walls.

The second support bracket may be provided with an isolation wall disposed between the pair of side walls, extending from the bottom wall toward one side based on the third direction, and configured to divide the second bus bar accommodation space into one side space and the other side space based on the second direction.

The second support bracket may be provided with a fixing member configured to fix the second support bracket to the reinforcement beam member.

The first support bracket may further include extension side walls formed as the side walls extend toward the other side based on the third direction further than the bottom wall, and a space between the pair of extension side walls in the second direction may define the second bus bar accommodation space.

The second support bracket may be disposed at the other side of the first support bracket based on the third direction, and the other end of the extension side wall of the first support bracket based on the third direction may adjoin, in the third direction, one end of the side wall of the second support bracket based on the third direction.

The first support bracket may further include a partition protrusion protruding from the bottom wall toward the other side based on the third direction and provided at a position corresponding to the isolation wall in the second direction, and the partition protrusion may divide the second bus bar accommodation space into one side space and the other side space based on the second direction.

The second support bracket may be disposed at the other side of the first support bracket based on the third direction, and the other end of the partition protrusion of the first support bracket based on the third direction may be disposed adjacent to and face, in the third direction, one end of the isolation wall of the second support bracket based on the third direction.

The reinforcement beam member may be provided with a base beam fixed onto the base plate, and a pair of sidewall beams extending and protruding from two opposite ends of the base beam based on the second direction toward one side based on the third direction further than the base beam.

At least a part of an outer surface of the side wall of the second support bracket may be disposed adjacent to and face an inner surface of the sidewall beam.

At least a partial section of the side wall of the second support bracket in the first direction may be disposed adjacent to and faces the inner surface of the sidewall beam within the entire range in the third direction.

The side wall of the second support bracket may face a lower range of the inner surface corresponding to 0.4 times to 0.6 times the length of the sidewall beam in the third direction.

At least a part of an outer surface of the side wall of the first support bracket may be disposed adjacent to and face an inner surface of the sidewall beam.

At least a partial section of the side wall of the first support bracket in the first direction may be disposed adjacent to and face the inner surface of the sidewall beam within a partial range in the third direction.

The side wall of the first support bracket may face the remaining upper range of the inner surface of the sidewall beam that does not face the side wall of the second support bracket.

The fixing member of the second support bracket may be fixed to one end of the base beam based on the third direction.

The fixing member of the second support bracket may be fixed to the base beam between the pair of sidewall beams.

The fixing member of the first support bracket may be fixed to one end of the sidewall beam based on the third direction.

A length in the first direction of a pair of second bus bars accommodated in the second bus bar accommodation space defined by the isolation wall of the second support bracket is longer than a length in the first direction of a pair of first bus bars accommodated in the first bus bar accommodation space defined by the isolation wall of the first support bracket.

The second support bracket may be singly and additionally installed at another position on the reinforcement beam member based on the first direction without the first support bracket and additionally support the pair of second bus bars at the corresponding position.

An insulation coating may be applied to surfaces of the first and second bus bars.

The insulation coating may be formed by winding a mica tape around the surfaces of the first and second bus bars.

An assembling order may be as follows.

First, one second support bracket may be installed on the reinforcement beam member, or two or more second support brackets may be installed at different positions in the first direction. This may be implemented by moving the second support bracket from one side of the reinforcement beam member based on the third direction toward the other side based on the third direction and fastening the second support bracket with the fixing member.

Next, the pair of second bus bars may be accommodated in the defined second bus bar accommodation space of the second support bracket so that the pair of second bus bars are supported by one second support bracket or two or more second support brackets. This may be implemented by inserting the second bus bar from one side of the second support bracket based on the third direction toward the other side based on the third direction. The second bus bar may be accommodated in the second bus bar accommodation space in the state in which the insulation coating is applied.

Next, the first support bracket may be stacked on the second support bracket, and the first support bracket may be installed on the reinforcement beam member. This may be implemented by moving the first support bracket from one side of the reinforcement beam member and one side of the second support bracket based on the third direction toward the other side based on the third direction and fastening the first support bracket with the fixing member.

Lastly, the pair of first bus bars may be accommodated in the defined first bus bar accommodation space of the first support bracket so that the pair of first bus bars are supported by the first support bracket. This may be implemented by inserting the first bus bar from one side of the first support bracket based on the third direction toward the other side based on the third direction. The first bus bar may be accommodated in the first bus bar accommodation space in the state in which the insulation coating is applied.

The present disclosure provides a vehicle equipped with the battery pack.

### [Advantageous Effects]

According to the present disclosure, it is possible to support the plurality of bus bars disposed in the longitudinal direction in the narrow, long space so that the plurality of bus bars are stably insulated from one another.

According to the present disclosure, the support bracket may stably support an appropriate longitudinal portion of the elongated bus bar having two opposite fixed ends, thereby preventing deformation or vibration of the bus bar that may be caused by the weight of the bus bar or the operation of the vehicle.

According to the present disclosure, it is possible to easily assemble the bus bars without requiring a complicated assembling process performed in consideration of insulation.

According to the present disclosure, it is possible to conveniently install and stably support the bus bar and the support bracket while minimizing the use of space.

The specific effects of the present disclosure, together with the above-mentioned effects, will be described along with the description of specific items for carrying out the present disclosure.

### [Description of Drawings]

FIG. 1 is a view illustrating a vehicle equipped with a battery pack to which a support bracket according to the embodiment is applied.
FIG. 2 is a perspective view illustrating the battery pack according to the embodiment.
FIG. 3 is a perspective view illustrating a state in which a top cover of the battery pack in FIG. 2 is removed.
FIG. 4 is a perspective view illustrating a state in which a battery module of the battery pack in FIG. 3 is removed.
FIG. 5 is a perspective view illustrating a state in which a reinforcement beam member, the support bracket, and a bus bar in FIG. 4 are extracted.
FIG. 6 is an exploded perspective view illustrating the reinforcement beam member, the support bracket, and the bus bar in FIG. 5.
FIG. 7 is a front view illustrating the reinforcement beam member in FIG. 6.
FIG. 8 is an enlarged perspective view illustrating a recessed groove portion of the reinforcement beam member in FIG. 6.
FIGS. 9, 10, and 11 are a perspective top plan view, a perspective bottom plan view, and a front view illustrating a second support bracket in FIG. 6.
FIGS. 12, 13, and 14 are a perspective top plan view, a perspective bottom plan view, and a front view illustrating a first support bracket in FIG. 6.
FIG. 15 is a perspective view illustrating a state in which the second support bracket is assembled and fixed to a portion of the reinforcement beam member in FIG. 8.
FIG. 16 is a cross-sectional side view in FIG. 15.
FIG. 17 is a front view of FIG. 15.
FIG. 18 is a perspective view illustrating a state in which a second bus bar is inserted into the reinforcement beam member and the second support bracket in FIG. 15.
FIG. 19 is a front view of FIG. 18.
FIG. 20 is a perspective view illustrating a state in which the first support bracket is assembled and fixed to the reinforcement beam member and the second support bracket into which the second bus bar in FIG. 18 is inserted.
FIG. 21 is a front view of FIG. 20.
FIG. 22 is a perspective view illustrating a state in which a first bus bar is inserted into the reinforcement beam member and the first support bracket in FIG. 20.
FIG. 23 is a front view of FIG. 22.

### <Explanation of Reference Numerals and Symbols>

3, 3-1, 3-2: Support bracket
31, 31-1, 31-2: Bus bar accommodation space
32: Side wall
329: Extension side wall
33: Bottom wall
34: Isolation wall
35: Extension isolation wall
36: Partition protrusion
37: Fixing member
38: Guide protrusion
7: Battery pack
71: Base plate
72: Outer wall
73: Reinforcement beam member
731: Recessed groove
732: Fastening hole
74: Base beam
75: Sidewall beam
76: Battery module
77: PRA
78: HVC
8, 8-1, 8-2: Bus bar
83: Coating
9: Vehicle

### [Mode for Invention]

Hereinafter, exemplary embodiments of the present disclosure will be described in detail with reference to the accompanying drawings.

The present disclosure is not limited to the embodiments disclosed herein, but will be variously changed and implemented in various different forms. The embodiments are provided so that the present disclosure will be thorough and complete, and also to provide a more complete understanding of the scope of the present disclosure to those of ordinary skill in the art. Therefore, it should be understood that the present disclosure is not limited to the embodiments disclosed below, but the configuration of any one embodiment and the configuration of another embodiment can be substituted or added, and the present disclosure includes all alterations, equivalents, and alternatives that are included in the technical spirit and scope of the present disclosure.

It should be interpreted that the accompanying drawings are provided only to allow those skilled in the art to easily understand the exemplary embodiments disclosed in the present specification, and the technical spirit disclosed in the present specification is not limited by the accompanying drawings, and includes all alterations, equivalents, and alternatives that are included in the spirit and the technical scope of the present disclosure. In the drawings, sizes or thicknesses of constituent elements may be exaggerated, increased, or decreased for convenience of understanding, but the protection scope of the present disclosure should not be restrictively construed.

The terms used in the present specification are used only for the purpose of describing particular examples or embodiments and are not intended to limit the present disclosure. Further, singular expressions include plural expressions unless clearly described as different meanings in the context. In the present application, the terms "comprises," "comprising," "includes," "including," "containing," "has," "having", and other variations thereof are intended to specify the presence of features, integers, steps, operations, elements, components, and/or combinations thereof disclosed in the specification. That is, in the present application, it should be understood that the terms "comprises," "comprising," "includes," "including," "containing," "has," "having", and other variations thereof do not preclude the presence or addition of one or more other features, integers, steps, operations, elements, components, and/or combinations thereof.

The terms including ordinal numbers such as "first," "second," and the like may be used to describe various constituent elements, but the constituent elements are not limited by the terms. These terms are used only to distinguish one constituent element from another constituent element.

When one constituent element is described as being "connected" or "adjoining" to another constituent element, it should be understood that one constituent element can be connected or adjoin directly to another constituent element, and an intervening constituent element can also be present between the constituent elements. When one constituent element is described as being "connected directly to" or "adjoining directly to" another constituent element, it should be understood that no intervening constituent element is present between the constituent elements.

When one constituent element is described as being "disposed above" or "disposed below" another constituent element, it should be understood that one constituent element can be disposed directly on another constituent element, and an intervening constituent element can also be present between the constituent elements.

Unless otherwise defined, all terms used herein, including technical or scientific terms, have the same meaning as commonly understood by those skilled in the art to which the present disclosure pertains. The terms such as those defined in a commonly used dictionary should be interpreted as having meanings consistent with meanings in the context of related technologies and should not be interpreted as ideal or excessively formal meanings unless explicitly defined in the present application.

In the description of the embodiment, for convenience of description, a first direction may refer to a forward/rearward direction, a second direction may refer to a leftward/rightward direction, and a third direction may refer to an upward/downward direction. The forward/rearward direction may be understood as a direction in which a vehicle travels, the leftward/rightward direction may be understood as a width direction of the vehicle, and the upward/downward direction may be understood as a height direction of the vehicle. However, because the above-mentioned matching is provided to assist in understanding the present disclosure by ensuring the convenience of description, it is apparent that the directions are not necessarily required to be matched as described above to determine the technical spirit.

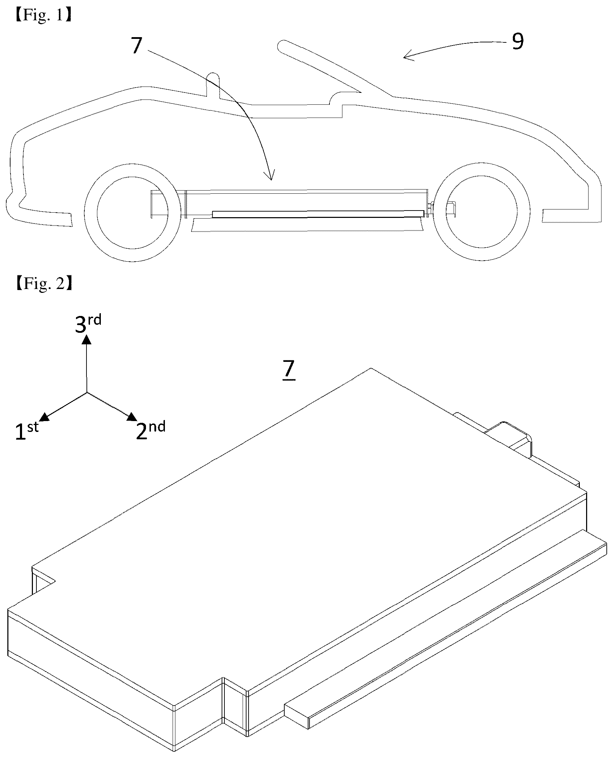

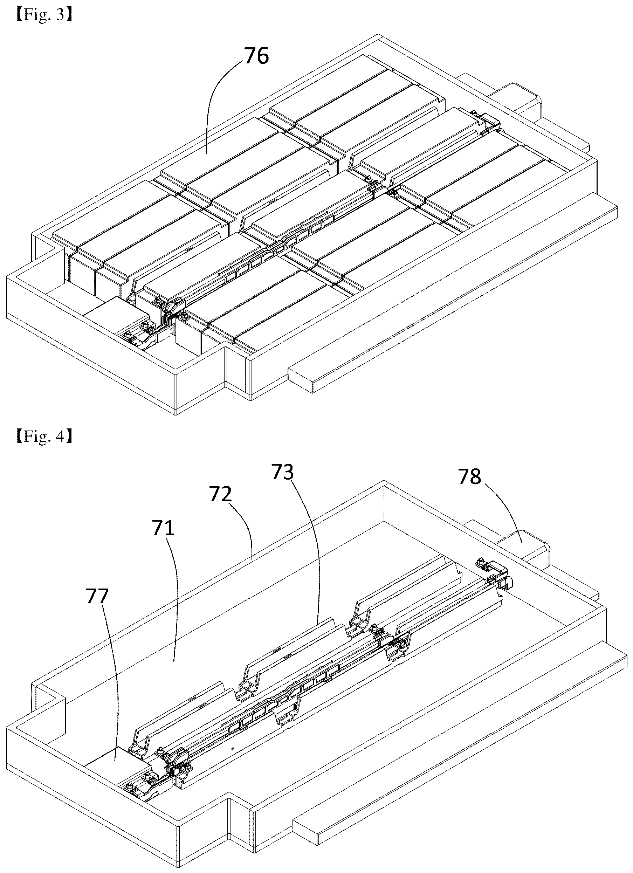

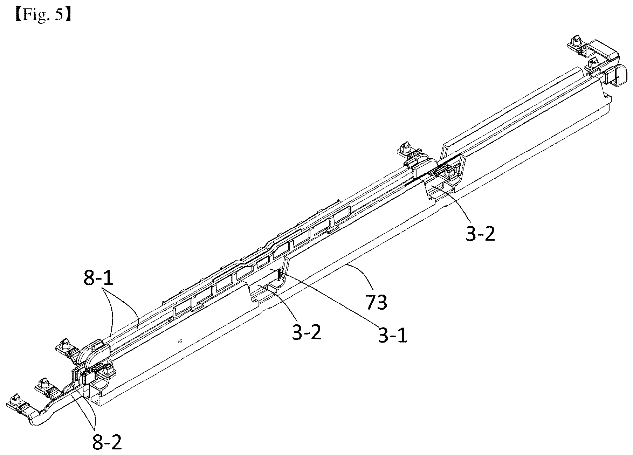

With reference to FIGS. 1 to 6, a battery pack 7 according to the embodiment may be mounted in a vehicle 9.

The battery pack 7 includes an approximately rectangular base plate 71 parallelly extending in the forward/rearward direction and the leftward/rightward direction, an outer wall 72 extending upward from an edge of the base plate 71 and configured to define an internal space of the battery pack 7, and a plurality of battery modules 76 accommodated in the internal space.

In addition, the battery pack 7 includes a reinforcement beam member 73 configured to reinforce strength of the battery pack 7 and provide a space in which various components within the battery pack 7 may be embedded. The reinforcement beam member 73 is elongated in the forward/rearward direction and disposed in the vicinity of a central portion based on the width direction inside the battery pack 7. In the embodiment, a structure is exemplarily provided in which a pair of reinforcement beam members 73 are disposed at positions vertically symmetric with respect to a center of the battery pack 7.

The rectangular parallelepiped battery modules 76 elongated in the forward/rearward direction may be disposed in three rows in the forward/rearward direction inside the battery pack 7. Further, a total of seven battery modules 76 may be disposed side by side such that three battery modules 76 are disposed at each location between the outer wall 72 and the reinforcement beam member 73 in the width direction, and one battery module 76 is disposed between the two reinforcement beam members 73.

In the battery pack 7, a pair of first bus bars 8-1 elongated in the forward/rearward direction and configured to electrically connect the battery modules 76 are provided, and a pair of second bus bars 8-2 elongated in the forward/rearward direction and configured to perform an external input and output of the battery pack are provided.

All the pair of first bus bars 8-1 and the pair of second bus bars 8-2 are accommodated in an accommodation space provided in one reinforcement beam member 73.

Unlike partial bus bars (not illustrated) configured to connect the battery modules 76 provided to be laterally adjacent to one another, the first bus bars 8-1 may connect groups of the battery modules 76 disposed forward and rearward. The first bus bar 8-1 constitutes a current path through which a high voltage and a high current are applied, thereby ensuring a significant cross-sectional area. The first bus bar 8-1 is elongated in the forward/rearward direction by a length corresponding to the battery modules 76 disposed in two rows in the forward/rearward direction.

The second bus bar 8-2 may connect a power relay assembly (PRA) 77 of the battery pack 7, which serves to connect or block electric power for a battery system of the vehicle, and a high-voltage connector (HVC) 78 that is a connector configured to output electric power to the outside of the battery pack 7. The second bus bar 8-2 also constitutes a current path through which a high voltage and a high current are applied, thereby ensuring a significant cross-sectional area. The second bus bar 8-2 is further elongated in the forward/rearward direction by a length corresponding to the battery modules 76 disposed in three rows in the forward/rearward direction.

A coating 83 required to insulate the bus bar 8 may be applied to a surface of the bus bar 8. In the embodiment, the coating 83 may be applied by winding a mica tape around the bus bar 8 multiple times. The mica tape is excellent in fire resistance and exhibits fire resistance at a high temperature of 1000°C or more. The mica tape may be manufactured by bonding a reinforcement material to one surface or two opposite surfaces by using a bonding agent having excellent heat resistance on soft or hard laminated mica. The mica tape is excellent in electrical insulation and thermal insulation and electrically safe.

Therefore, a cross-sectional area of the bus bar 8 may be further increased.

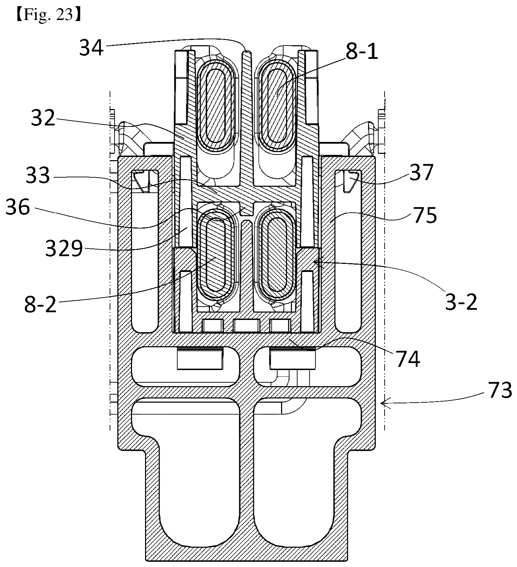

The bus bar 8, which has two opposite fixed longitudinal ends, elongated in the forward/rearward direction, and made of metal, may be deformed as a central portion thereof sags due to the weight thereof. Therefore, as illustrated in FIG. 23, the cross-section of the bus bar 8 may be configured such that a height thereof is larger than a width thereof, thereby enhancing resistance against sagging. In contrast, this cross-section may have relatively low resistance against deformation in which the bus bar swings in the leftward/rightward direction due to vibration or impact occurring in the vehicle.

The embodiment provides a support bracket 3 configured to support the bus bars 8, which are elongated in the forward/rearward direction, in order to stably maintain a state in which the bus bars 8 are spaced apart from one another in the leftward/rightward direction while maintaining a state in which the bus bars 8 are insulated from one another.

The support bracket 3 may be disposed to support a region adjacent to a longitudinal central portion of the bus bar 8 at which deformation or swinging may be most likely to occur. That is, it is sufficient that the support bracket 3 has a length to the extent that the support bracket 3 may support a longitudinal partial section of the bus bar 8. However, the present disclosure does not exclude a configuration in which the support bracket 3 is manufactured to be long while corresponding to an extension length of the bus bar 8.

In the embodiment, a length of the first bus bar 8-1 is approximately 2 times a length of the battery module 76, and a length of the second bus bar 8-2 is approximately 3 times a length of the battery module 76. Further, according to the embodiment, a position of one longitudinal end of the first bus bar 8-1 substantially corresponds to a position of one longitudinal end of the second bus bar 8-2 in the forward/rearward direction. That is, according to the embodiment, a position of a longitudinal central portion of the first bus bar 8-1 and a position of a longitudinal central portion of the second bus bar 8-2 are different from each other in the forward/rearward direction.

Therefore, in the embodiment, the pair of first bus bars 8-1 are disposed to be spaced apart from each other leftward and rightward at the same height, the pair of second bus bars 8-2 are disposed to be spaced apart from each other leftward and rightward at the same height, the pair of first bus bars 8-1 and the pair of second bus bars 8-2 are disposed to be spaced apart from one another in the upward/downward direction, and the pair of first bus bars 8-1 and the pair of second bus bars 8-2 are disposed to be substantially aligned with each other in the upward/downward direction. Further, the second bus bar 8-2 having a longer length is disposed below the first bus bar 8-1.

Further, in the embodiment, the first bus bar 8-1 and the second bus bar 8-2 are supported by the support bracket 3 at the position of the longitudinal central portion of the first bus bar 8-1 and a longitudinal 1/3 position (first position) of the second bus bar 8-2, and the second bus bar 8-2 is additionally supported at a longitudinal 2/3 position (second position) of the second bus bar 8-2, thereby stably supporting the bus bars 8.

Therefore, the first bus bar 8-1 is supported at one point by the support bracket 3, and the second bus bar 8-2 is supported at two points by the support bracket 3.

Meanwhile, the first bus bar 8-1 and the second bus bar 8-2 may be different in specifications.

In consideration of these configurations, in the embodiment, the support bracket 3 configured to support the bus bar 8 is manufactured to be divided into a first support bracket having a shape and/or a structure capable of corresponding to the specifications of the cross-section of the first bus bar 8-1, and a second support bracket having a shape and/or a structure capable of corresponding to the specifications of the cross-section of the second bus bar 8-2.

Further, in the embodiment, the second support bracket to be used at two points may also be used singly, and the first support bracket to be used at one point together with the second support bracket may be stacked on the second support bracket and used.

Then, it is possible to minimize the number of types of components for constituting the support bracket 3.

In addition, the first support bracket and the second support bracket may be applied even to the battery pack, in which the bus bars 8 are disposed in a different manner from those in the embodiment, as long as the specifications of the cross-section of the bus bar 8 are substantially maintained.

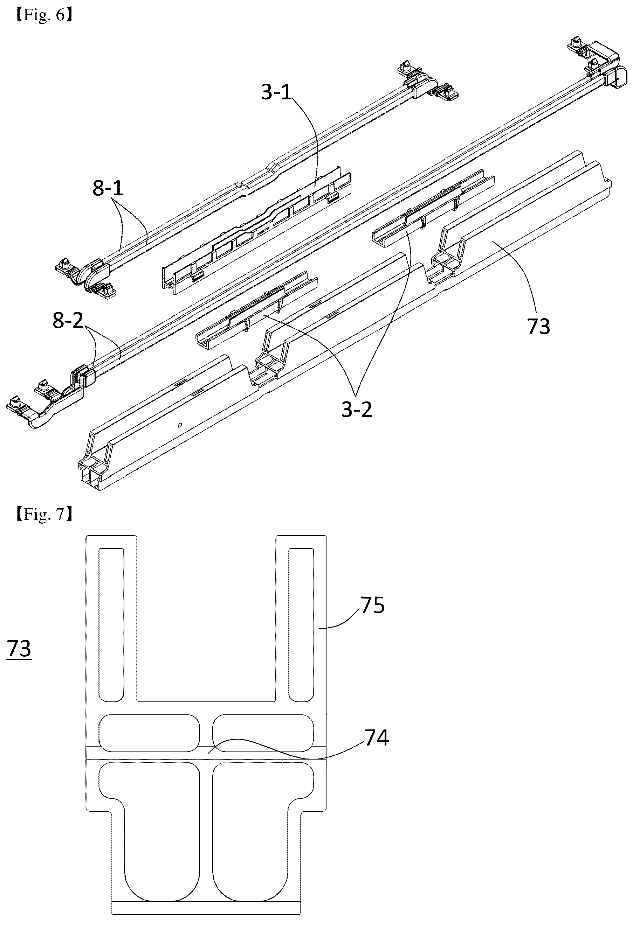

Hereinafter, prior to the description of the structures first and second support brackets described above, a structure of the reinforcement beam member 73 in which the bus bar 8 is accommodated will be described with reference to FIGS. 7 and 8.

The reinforcement beam member 73 may be elongated in the forward/rearward direction and have a uniform cross-sectional shape in the forward/rearward direction. That is, the reinforcement beam member 73 may be manufactured by performing extrusion molding on metal. The cross-section may have a shape capable of minimizing the use of metal by means of a material reduction, thereby reducing the amount of material and the weight and ensuring the required rigidity.

The reinforcement beam member 73 in the embodiment is provided with a base beam 74 fixed onto the base plate 71, and a pair of sidewall beams 75 extending to protrude further than the base beam 74 from two opposite ends of the base beam 74 based on the second direction toward one side based on the third direction.

The reinforcement beam member 73 has a length substantially corresponding to the battery modules 76 disposed in a plurality of rows in the longitudinal direction. Further, a recessed groove 731 having a predetermined shape is provided at a position corresponding to a longitudinal end of the battery module 76 in the longitudinal direction of the reinforcement beam member 73.

In the embodiment, the length of the reinforcement beam member 73 corresponds to a length of the battery modules 76 disposed in three rows in the longitudinal direction. Further, the recessed grooves 731 are respectively provided at 1/3 and 2/3 points based on the longitudinal direction of the reinforcement beam member 73, and the recessed grooves 731 corresponding to a 1/2 shape are respectively provided at front and rear ends of the reinforcement beam member 73.

The recessed groove 731 may have a "U" or "V" shape when viewed from the lateral side. The recessed groove 731 may have a shape having a width that gradually increases upward.

The embodiment provides an example in which the recessed groove 731 has a shape in which both the sidewall beams 75 are recessed in the height direction and the base beam 74 is recessed by approximately 1/2 from above.

Fastening holes 732, into which fixing members 37 of an upper support bracket 3-1 to be described below are fitted and fastened, may be provided in upper surfaces of the sidewall beams 75 and provided at two opposite sides of the recessed groove 731 based on the longitudinal direction.

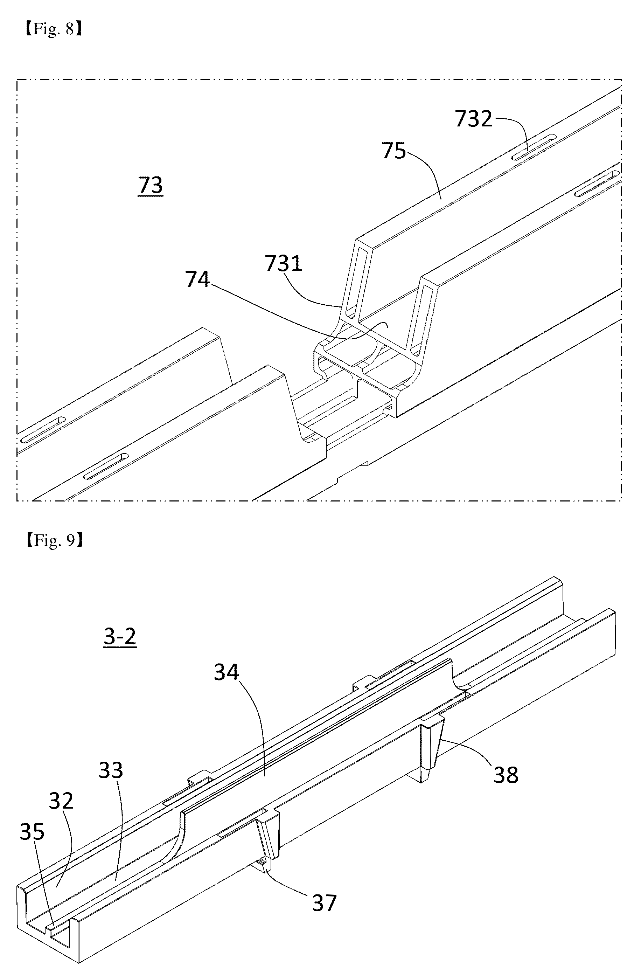

Next, a structure of the second support bracket for supporting the second bus bar 8-2 disposed at the lower side will be described with reference to FIGS. 9 to 11. Hereinafter, the second support bracket will be referred to as a lower support bracket 3-2 because the second support bracket is installed below the first support bracket.

The lower support bracket 3-2 provides a second bus bar accommodation space 31-2 extending in the forward/rearward direction and opened upward.

To this end, the lower support bracket 3-2 is provided with a pair of side walls 32 respectively disposed at two opposite sides of the second bus bar accommodation space 31-2 and extending in the upward/downward direction. The side wall 32 extends in the forward/rearward direction. The pair of side walls 32 block the two opposite sides of the second bus bar accommodation space 31-2.

Further, the lower support bracket 3-2 is provided with a bottom wall 33 disposed below the second bus bar accommodation space 31-2 and extending in the leftward/rightward direction to connect the pair of side walls 32. The bottom wall 33 extends in the forward/rearward direction. The bottom wall 33 blocks a lower side of the second bus bar accommodation space 31-2.

Further, the lower support bracket 3-2 is provided with an isolation wall 34 extending upward from a region adjacent to a center of the bottom wall 33 based on the width direction and configured to divide the second bus bar accommodation space 31-2 into a left space and a right space. The isolation wall 34 extends in the forward/rearward direction.

Further, the lower support bracket 3-2 includes the plurality of fixing members 37 configured to fix the lower support bracket 3-2 at a predetermined position on the reinforcement beam member 73.

The fixing member 37 is provided with a cantilever portion extending downward from a bottom surface of the bottom wall 33, and a hook formed on a leading end portion of the fixing member 37.

The cantilever portion of the fixing member 37 has a shape provided with a rectangular cross-section having a width in the leftward/rightward direction larger than a thickness in the forward/rearward direction. Therefore, elastic deformation in the forward/rearward direction relatively easily occurs, and sufficient tensile strength in the upward/downward direction is ensured.

Four fixing members 37 are provided. The two fixing members provided forward are disposed side by side leftward and rightward, and the hooks protrude forward. The two fixing members provided rearward are also disposed side by side leftward and rightward while corresponding to the front fixing members, and the hooks protrude rearward. As described above, the four fixing members 37 are disposed to be spaced apart from one another in the leftward/rightward direction and the forward/rearward direction.

Four guide protrusions 38 protrude outward from outer surfaces of the side walls 32. The guide protrusions 38 adjoin the recessed grooves 731 and guide an assembling position of the lower support bracket 3-2 in the forward/rearward direction when the lower support bracket 3-2 is assembled to the reinforcement beam members 73.

A position of the guide protrusion 38 in the forward/rearward direction may correspond to a position of the fixing member 37 in the forward/rearward direction. This is based on the fact that the fixing member 37 has a structure fastened by being caught by an upper end of the base beam 74 exposed by the recessed groove 731.

An extension length of each of the side wall 32 and the bottom wall 33 in the forward/rearward direction is longer than a length of the recessed groove 731 in the forward/rearward direction. Therefore, the lower support bracket 3-2 is stably assembled even in case that the lower support bracket 3-2 is assembled to a portion where the recessed groove 731 of the reinforcement beam member 73 is formed.

An extension length of the isolation wall 34 in the forward/rearward direction is shorter than an extension length of the side wall 32 in the forward/rearward direction. Therefore, the second bus bar 8-2 is more easily inserted into the second bus bar accommodation space 31-2.

The extension length of the isolation wall 34 in the forward/rearward direction may be about 1/3 or more and 2/3 or less of the extension length of the side wall 32 in the forward/rearward direction.

The isolation wall 34 is disposed at a central portion of the side wall 32 based on the forward/rearward direction. Further, extension isolation walls 35 protruding upward from the bottom wall 33 are further provided at front and rear ends of the isolation wall 34. In the remaining section in which the isolation wall 34 is provided in the forward/rearward direction, the extension isolation walls 35 extend in the forward/rearward direction and are connected to the isolation wall 34. A connection portion between the isolation wall 34 and the extension isolation wall 35 is rounded. A height of the extension isolation wall 35 is lower than a height of the isolation wall 34.

Therefore, the rigidity of the lower support bracket 3-2 is ensured, and the second bus bar 8-2 is easily inserted. In addition, after the second bus bars 8-2 are inserted once, the extension isolation walls 35 may also support the state in which the two second bus bars 8-2 are spaced apart from each other.

An extension length of the lower support bracket 3-2 in the forward/rearward direction is shorter than an extension length of the upper support bracket 3-1, which will be described below, in the forward/rearward direction. Because the lower support bracket 3-2 supports the second bus bars 8-2 at two different longitudinal points, the lower support bracket 3-2 may be configured to be shorter than the upper support bracket 3-1.

The side wall 32 and the bottom wall 33 are formed to be thicker than the isolation wall 34 in order to ensure the rigidity of the lower support bracket 3-2 and ensure an insulation distance from the reinforcement beam member 73 made of metal.

A material reduction of the side wall 32 is applied to an upper or lower portion thereof. Further, a material reduction of the bottom wall 33 is also applied to a lower portion thereof.

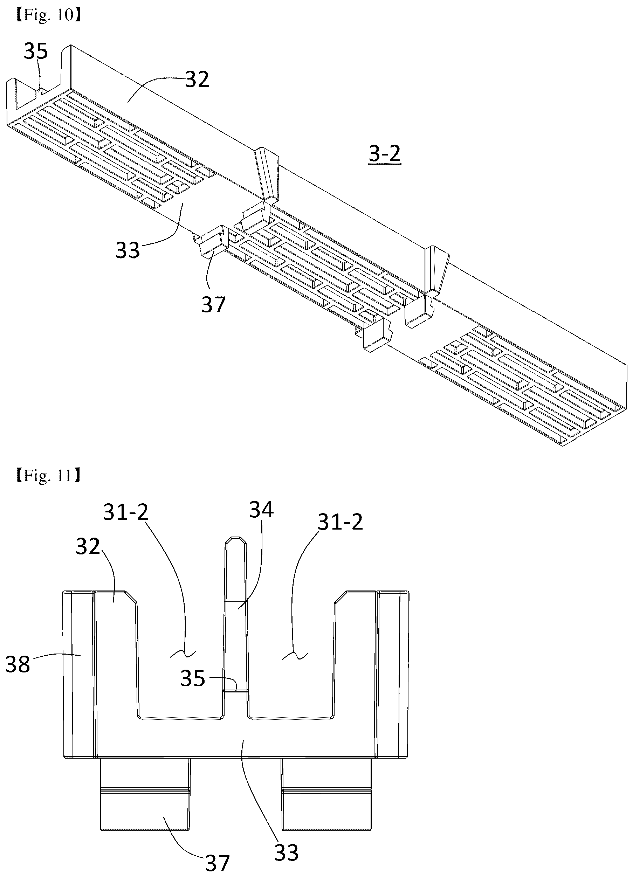

With reference to FIG. 10, high strength of a partial region of the bottom wall 33 is ensured without a material reduction. This is based on the fact that the partial region of the bottom wall 33 is a region in which the lower support bracket 3-2 is mounted on an upper surface of the base beam 74 of the reinforcement beam member 73 with the recessed groove 731 interposed therebetween, i.e., a region in which a load, which is not supported by the recessed groove 731, is concentratedly applied.

Likewise, with reference to FIGS. 9 and 10, a material reduction is also applied to an upper portion of the side wall 32 in a region corresponding to the region of the bottom wall 33 to which a material reduction is not applied, thereby supporting a concentrated load. In contrast, a material reduction is applied to a lower portion of the side wall 32 in the remaining region, thereby supporting a load of the upper support bracket 3-1 to be stacked on the upper portion of the side wall 32.

In order to guide the insertion of the second bus bar 8-2, predetermined chamfering is applied to an inner corner of an upper end of the side wall 32. Likewise, an upper end of the isolation wall 34 is rounded to guide the insertion of the second bus bar 8-2.

Further, inner surfaces of the side walls 32 and two opposite surfaces of the isolation wall 34 also have slight inclination angles to guide the insertion of the second bus bars 8-2.

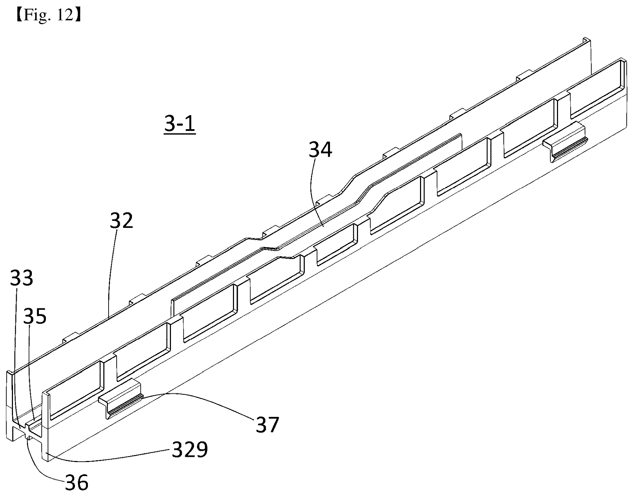

Next, a structure of the first support bracket for supporting the first bus bar 8-1 disposed at the upper side will be described with reference to FIGS. 12 to 14. Hereinafter, the first support bracket will be referred to as the upper support bracket 3-1 because the first support bracket is installed above the second support bracket.

The upper support bracket 3-1 extends in the forward/rearward direction and provides a first bus bar accommodation space 31-1 opened upward.

To this end, the upper support bracket 3-1 is provided with a pair of side walls 32 respectively disposed at two opposite sides of the first bus bar accommodation space 31-1 and extending in the upward/downward direction. The side wall 32 extends in the forward/rearward direction. The pair of side walls 32 block two opposite sides of the first bus bar accommodation space 31-1.

Further, the upper support bracket 3-1 is provided with a bottom wall 33 disposed below the first bus bar accommodation space 31-1 and extending in the leftward/rightward direction to connect the pair of side walls 32. The bottom wall 33 extends in the forward/rearward direction. The bottom wall 33 blocks a lower side of the first bus bar accommodation space 31-1.

The side wall 32 is provided with an extension side wall 329 extending downward further than the bottom wall 33. A lower end of the extension side wall 329 is placed at an upper end of the side wall 32 of the lower support bracket 3-2. Therefore, the pair of extension side walls 329, together with the pair of side walls 32 of the lower support bracket 3-2, may define the second bus bar accommodation space 31-2. The side walls 32 of the lower support bracket 3-2 receive a load from the upper support bracket 3-1 through the extension side walls 329 of the upper support bracket 3-1.

In addition, the upper support bracket 3-1 is provided with an isolation wall 34 extending upward from a region adjacent to a center of the bottom wall 33 based on the width direction and configured to divide the first bus bar accommodation space 31-1 into a left space and a right space. The isolation wall 34 extends in the forward/rearward direction.

Further, the upper support bracket 3-1 includes a plurality of fixing members 37 configured to fix the upper support bracket 3-1 at a predetermined position on the reinforcement beam member 73.

The fixing member 37 is provided with a cantilever portion extending downward and outward in a 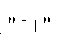 shape from an outer surface of the side wall 32, and a hook formed on a leading end portion of the fixing member 37.

The cantilever portion of the fixing member 37 has a shape provided with a rectangular cross-section having a larger width in the forward/rearward direction. Therefore, elastic deformation in the leftward/rightward direction relatively easily occurs, and sufficient tensile strength in the upward/downward direction and sufficient tensile strength in the leftward/rightward direction are ensured.

Four fixing members 37 are provided. The two fixing members provided forward are respectively disposed on the outer surfaces of the pair of side walls 32 so as to be opposite to each other, and the hooks protrude outward. The two fixing members provided rearward are also disposed on the outer surfaces of the pair of side walls 32 so as to be opposite to each other while corresponding to the front fixing members, and the hooks protrude outward. As described above, the four fixing members 37 are disposed to be spaced apart from one another in the leftward/rightward direction and the forward/rearward direction.

An extension length of the isolation wall 34 in the forward/rearward direction is shorter than an extension length of the side wall 32 in the forward/rearward direction. Therefore, the first bus bar 8-1 is more easily inserted into the first bus bar accommodation space 31-1.

The extension length of the isolation wall 34 in the forward/rearward direction may be about 1/3 or more and 2/3 or less of the extension length of the side wall 32 in the forward/rearward direction.

The isolation wall 34 is disposed at a central portion of the side wall 32 based on the forward/rearward direction. Further, extension isolation walls 35 protruding upward from the bottom wall 33 are further provided at front and rear ends of the isolation wall 34. In the remaining section in which the isolation wall 34 is provided in the forward/rearward direction, the extension isolation walls 35 extend in the forward/rearward direction and are connected to the isolation wall 34. A connection portion between the isolation wall 34 and the extension isolation wall 35 is rounded. A height of the extension isolation wall 35 is lower than a height of the isolation wall 34.

Therefore, the rigidity of the upper support bracket 3-1 is ensured, and the first bus bar 8-1 is easily inserted. In addition, after the first bus bars 8-1 are inserted once, the extension isolation walls 35 may also support the state in which the two first bus bars 8-1 are spaced apart from each other.

The upper support bracket 3-1 further includes a partition protrusion 36 protruding downward from the bottom wall 33 and provided at a position corresponding to the isolation wall 34.

The partition protrusion 36 faces an upper end of the isolation wall 34 of the lower support bracket 3-2 in the upward/downward direction. Therefore, the partition protrusion 36, together with the isolation wall 34 of the lower support bracket 3-2, divides the second bus bar accommodation space 31-2 into a left space and a right space. According to the embodiment, the left and right spaces are adjacent to each other without adjoining each other, such that the isolation wall 34 of the lower support bracket 3-2 does not directly receive a load of the upper support bracket 3-1.

As described above, the extension length of the upper support bracket 3-1 in the forward/rearward direction is longer than the extension length of the lower support bracket 3-2 in the forward/rearward direction.

The side wall 32, the extension side wall 329, and the bottom wall 33 are formed to be thicker than the isolation wall 34 in order to ensure the rigidity of the upper support bracket 3-1. Further, the side wall 32 and the extension side wall 329 are formed to be thicker than the bottom wall 33 in order to ensure an insulation distance from the reinforcement beam member 73 made of metal.

A material reduction of the side wall 32 is applied to an outer surface, an upper portion, and a lower portion thereof.

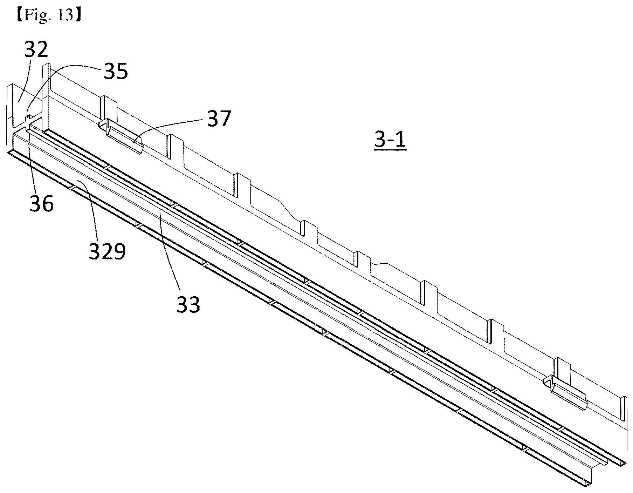

With reference to FIGS. 12 and 13, a material reduction of a region disposed below the fixing member 37 is slightly applied to the lower portion of the side wall 32 in order to support a load and ensure a supporting force for the fixing member 37, and a material reduction of a region disposed above the fixing member 37 is further applied to the outer surface and the upper portion of the side wall 32. Because the region of the side wall 32 disposed above the fixing member 37 does not face the reinforcement beam member 73 in a lateral direction, a necessity for ensuring an insulation distance is relatively low.

An upper end of the isolation wall 34 is rounded to guide the insertion of the first bus bar 8-1. Further, inner surfaces of the side walls 32 and two opposite surfaces of the isolation wall 34 also have slight inclination angles to guide the insertion of the first bus bars 8-1.

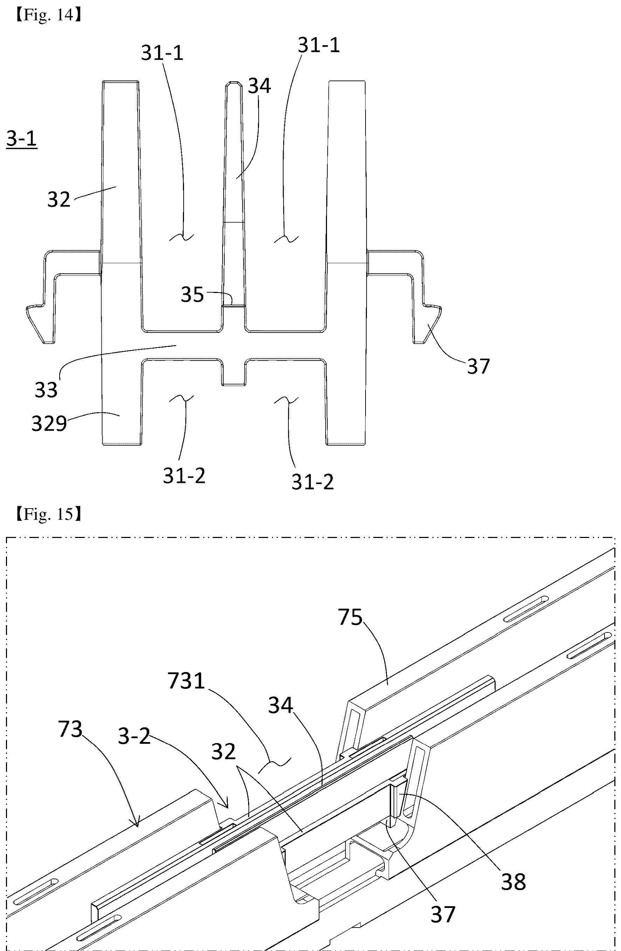

Hereinafter, a method of supporting the bus bar 8 by applying the support bracket 3 in the embodiment will be described with reference to FIGS. 15 to 23.

First, as illustrated in FIGS. 15 to 17, the lower support bracket 3-2 is installed in the portions of the reinforcement beam members 73 where the recessed grooves 731 are formed. According to the embodiment, the two lower support brackets 3-2 are respectively installed in the portions of the reinforcement beam members 73 where the two recessed grooves 731 are formed.

When the lower support brackets 3-2 are inserted downward between the pair of sidewall beams 75, the guide protrusions 38 are guided in the forward/rearward direction by the recessed groove portions of the sidewall beams 75. Therefore, the fixing members 37 of the lower support brackets 3-2 may be fastened, at exact positions, to the upper end of the base beam 74 by snap-fitting.

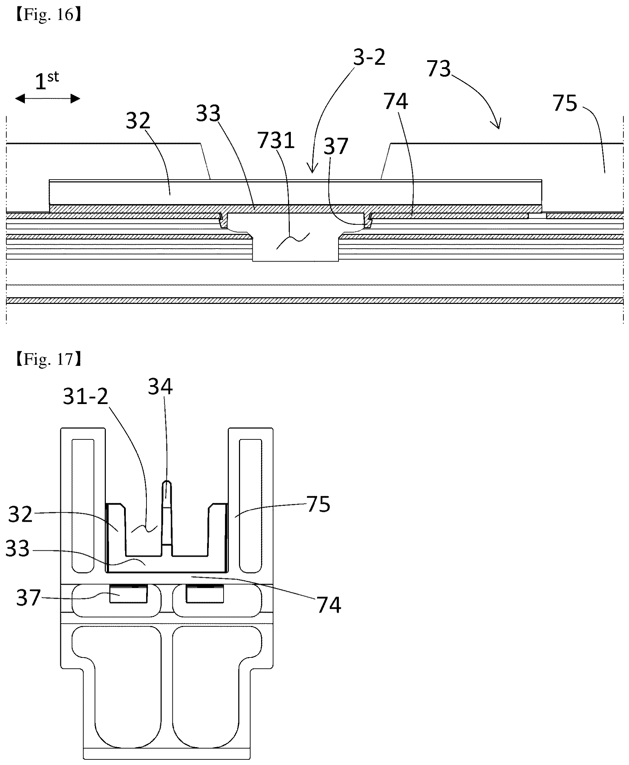

With reference to FIG. 17, a height of the side wall 32 of the lower support bracket 3-2 may be about 1/2 of a height of the base beam 74. In contrast, a height of the isolation wall 34 may be 1 times or more and 1.5 times or less the height of the side wall 32.

As described above, the height of the side wall 32 of the lower support bracket 3-2 is restricted so as not to be excessively high, such that a sufficient height at which the side wall 32 and the extension side wall 329 of the upper support bracket 3-1 are supported by the base beam 74 may be ensured, thereby enhancing the assembling stability of the upper support bracket 3-1.

Because the bottom wall 33 of the lower support bracket 3-2 is placed on the base beam 74, the assembling stability of the lower support bracket 3-2 is sufficiently ensured even in case that the height of the side wall 32 of the lower support bracket 3-2 is low. However, even in this case, the height of the side wall 32 needs to be ensured to some extent in order to ensure the insulation distance from the sidewall beam 75 when the lower support bracket 3-2 is used singly. In consideration of these situations, the height of the side wall 32 of the lower support bracket 3-2 is set to be about 1/2 of the height of the base beam 74.

In contrast, because the height of the isolation wall 34 of the lower support bracket 3-2 does not affect the assembling stability of the upper support bracket 3-1, the isolation wall 34 of the lower support bracket 3-2 may be sufficiently high. In this case, the height of the isolation wall 34 of the lower support bracket 3-2 may be set to be higher than the height of the side wall 32 within a range in which interference does not occur when the upper support bracket 3-1 is assembled. This setting is more advantageous even when the lower support bracket 3-2 is used singly without the upper support bracket 3-1.

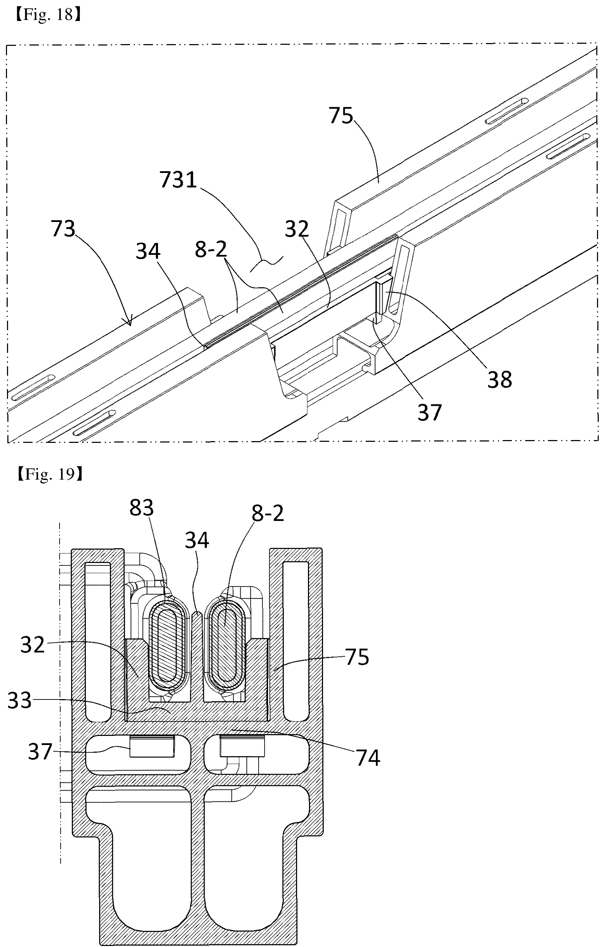

Next, as illustrated in FIGS. 18 and 19, the pair of second bus bars 8-2 are inserted downward into the second bus bar accommodation space 31-2 provided by the lower support brackets 3-2.

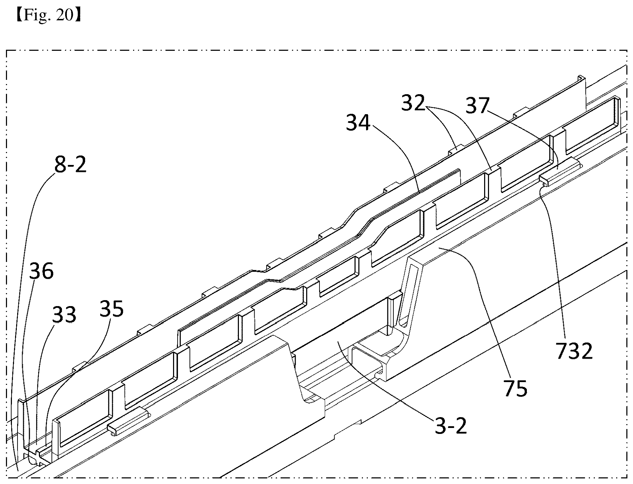

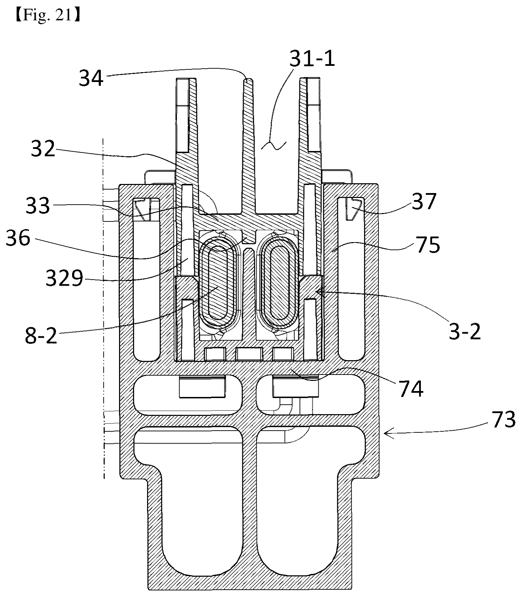

Next, as illustrated in FIGS. 20 and 21, the upper support bracket 3-1 is installed on the lower support bracket 3-2. According to the embodiment, the upper support bracket 3-1 is installed on one of the two lower support brackets 3-2.

An assembling process will be described specifically. First, the position of the fixing member 37 of the upper support bracket 3-1 based on the forward/rearward direction approximately corresponds to the position of the fastening hole 732 of the base beam 74, and the upper support bracket 3-1 is inserted downward between the pair of sidewall beams 75. In this case, even though the position of the fixing member 37 is somewhat misaligned from the fastening hole 732, the lower end of the fixing member 37 is placed at the upper end of the sidewall beam 75, and the upper support bracket 3-1 is temporarily mounted on the upper surfaces of the pair of sidewall beams 75.

In this state, the upper support bracket 3-1 is moved in the forward/rearward direction so that the fixing member 37 and the fastening hole 732 are matched. In this state, when the upper support bracket 3-1 pressed downward, the fixing member 37 passes through the fastening hole 732 and is fastened by snap-fitting, such that the lower end of the extension side wall 329 of the upper support bracket 3-1 is placed at the upper end of the side wall 32 of the lower support bracket 3-2.

With reference to FIG. 21, a downward protruding length of the partition protrusion 36 of the upper support bracket 3-1 is set to be shorter than a downward extension length of the extension side wall 329. According to the embodiment, a height of the partition protrusion 36 is 0.1 times or more and 0.5 times or less a height of the extension side wall 329. Therefore, a sufficient height of the isolation wall 34 of the lower support bracket 3-2 may be ensured, and the rigidity of the bottom wall 33 of the upper support bracket 3-1 may also be ensured.

In addition, the side wall 32 of the upper support bracket 3-1 is supported while facing the sidewall beam 75 by a height corresponding to about 1/2 of the sidewall beam 75. Therefore, the assembling stability of the upper support bracket 3-1 may be sufficiently ensured.

A height of the isolation wall 34 of the upper support bracket 3-1 may be equal to or lower than a height of the side wall 32. According to the embodiment, the height of the isolation wall 34 may be 0.5 times or more and 1.0 times or less the height of the side wall 32. The height of the isolation wall 34 may be close to the height of the side wall 32.

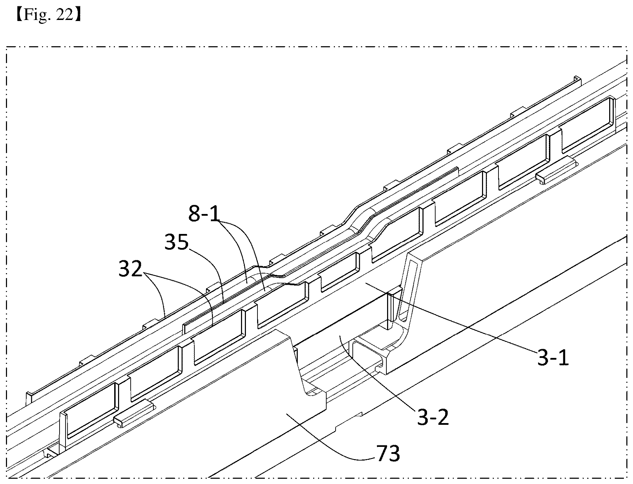

Lastly, as illustrated in FIGS. 22 and 23, the first bus bar 8-1 is inserted downward into the first bus bar accommodation space 31-1 of the upper support bracket 3-1 from above the upper support bracket 3-1.

Then, the first bus bar 8-1 may be supported by the upper support bracket 3-1 at a 1/2 point based on the longitudinal direction, and the second bus bar 8-2 may be supported by the lower support bracket 3-2 at a 1/3 point and a 2/3 point based on the longitudinal direction.

While the present disclosure has been described above with reference to the accompanying drawings, the present disclosure is not limited to the drawings and the embodiments disclosed in the present specification, and it is apparent that the present disclosure may be variously changed by those skilled in the art without departing from the technical spirit of the present disclosure. Further, even though the operational effects of the configurations of the present disclosure have not been explicitly disclosed and described in the description of the embodiment of the present disclosure, the effects, which can be expected by the corresponding configurations, should, of course, be acceptable.

## Claims

1. A support bracket, which supports a plurality of bus bars extending in a first direction in order to maintain a state in which the plurality of bus bars are disposed side by side and spaced apart from one another in a second direction intersecting the first direction, the support bracket comprising:
a bus bar accommodation space extending in the first direction and opened toward one side based on a third direction intersecting both the first direction and the second direction;
a pair of side walls respectively disposed at one side and the other side of the bus bar accommodation space based on the second direction, extending in the third direction, and configured to block two opposite sides of the bus bar accommodation space based on the second direction;
a bottom wall disposed at the other side of the bus bar accommodation space based on the third direction, extending in the second direction, and configured to connect the pair of side walls;
an isolation wall disposed between the pair of side walls, extending from the bottom wall toward one side based on the third direction, and configured to divide the bus bar accommodation space into one side space and the other side space based on the second direction; and
a fixing member configured to fix the support bracket at a position at which the support bracket is to be fixed.

2. The support bracket of claim 1, wherein the fixing member is provided as a plurality of fixing members, and the plurality of fixing members are disposed to be spaced apart from one another in at least any one of the first direction or the second direction.

3. The support bracket of claim 1, wherein the fixing member is connected to an outer side of the side wall based on the second direction.

4. The support bracket of claim 1, wherein the fixing member is connected to the other side of the bottom wall based on the third direction.

5. The support bracket of claim 1, wherein the fixing member comprises a hook member extending toward the other side based on the third direction.

6. The support bracket of claim 1, wherein the side wall is further provided with an extension side wall extending toward the other side based on the third direction further than the bottom wall, and a space between the pair of extension side walls in the second direction defines an additional bus bar accommodation space.

7. The support bracket of claim 6, wherein a partition protrusion protruding from the bottom wall toward the other side based on the third direction is provided at a position corresponding to the isolation wall in the second direction, and the partition protrusion divides the additional bus bar accommodation space into one side space and the other side space based on the second direction.

8. The support bracket of claim 1, wherein an extension length of the isolation wall in the third direction is 0.5 times or more and 1.0 times or less an extension length of the side wall in the third direction or 1.0 times or more and 1.5 times or less the extension length of the side wall in the third direction.

9. The support bracket of claim 7, wherein an extension length of the partition protrusion in the third direction is 0.1 times or more and 0.5 times or less an extension length of the extension side wall in the third direction.

10. The support bracket of claim 1, wherein a length by which the isolation wall extends in the first direction is shorter than a length by which the side wall extends in the first direction.

11. The support bracket of claim 10, wherein a length of the isolation wall in the first direction is 1/3 or more and 2/3 or less of a length of the side wall in the first direction.

12. The support bracket of claim 10, wherein extension isolation walls, which protrude from the bottom wall toward one side based on the third direction and are connected to the isolation wall in the first direction, are provided at one side and the other side of the isolation wall based on the first direction.

13. The support bracket of claim 12, wherein an extension length of the extension isolation wall in the third direction is shorter than an extension length of the isolation wall in the third direction.

14. A battery pack comprising:
a base plate extending in a first direction and a second direction intersecting the first direction;
a reinforcement beam member protruding toward one side based on a third direction intersecting both the first direction and the second direction, installed on the base plate, and extending in the first direction;
a plurality of bus bars extending in the first direction and accommodated in the reinforcement beam member; and
a first support bracket configured to support a plurality of bus bars in order to maintain a state in which the plurality of bus bars are disposed side by side and spaced apart from one another in the second direction in a state in which the plurality of bus bars are accommodated in the reinforcement beam member,
wherein the first support bracket comprises:
a first bus bar accommodation space extending in the first direction and opened toward one side based on the third direction;
a pair of side walls respectively disposed at one side and the other side of the first bus bar accommodation space based on the second direction, extending in the third direction, and configured to block two opposite sides of the first bus bar accommodation space based on the second direction;
a bottom wall disposed at the other side of the first bus bar accommodation space based on the third direction, extending in the second direction, and configured to connect the pair of side walls;
an isolation wall disposed between the pair of side walls, extending from the bottom wall toward one side based on the third direction, and configured to divide the first bus bar accommodation space into one side space and the other side space based on the second direction; and
a fixing member configured to fix the first support bracket to the reinforcement beam member.

15. The battery pack of claim 14, further comprising:
a second support bracket disposed at the other side of the first support bracket based on the third direction and configured to support the plurality of bus bars in order to maintain a state in which the plurality of bus bars are disposed side by side and spaced apart from one another in the second direction in a state in which the plurality of bus bars are accommodated in the reinforcement beam member,
wherein the second support bracket comprises:
a second bus bar accommodation space extending in the first direction and opened toward one side based on the third direction;
a pair of side walls respectively disposed at one side and the other side of the second bus bar accommodation space based on the second direction, extending in the third direction, and configured to block two opposite sides of the second bus bar accommodation space based on the second direction;
a bottom wall disposed at the other side of the second bus bar accommodation space based on the third direction, extending in the second direction, and configured to connect the pair of side walls;
an isolation wall disposed between the pair of side walls, extending from the bottom wall toward one side based on the third direction, and configured to divide the second bus bar accommodation space into one side space and the other side space based on the second direction; and
a fixing member configured to fix the second support bracket to the reinforcement beam member.

16. The battery pack of claim 15, wherein the first support bracket further comprises extension side walls formed as the side walls extend toward the other side based on the third direction further than the bottom wall, and
wherein a space between the pair of extension side walls in the second direction defines the second bus bar accommodation space.

17. The battery pack of claim 16, wherein the other end of the extension side wall of the first support bracket based on the third direction adjoins, in the third direction, one end of the side wall of the second support bracket based on the third direction.

18. The battery pack of claim 15, wherein the first support bracket further comprises a partition protrusion protruding from the bottom wall toward the other side based on the third direction and provided at a position corresponding to the isolation wall in the second direction, and
wherein the partition protrusion divides the second bus bar accommodation space into one side space and the other side space based on the second direction.

19. The battery pack of claim 18, wherein the other end of the partition protrusion of the first support bracket based on the third direction is disposed adjacent to and faces, in the third direction, one end of the isolation wall of the second support bracket based on the third direction.

20. The battery pack of claim 15, wherein the reinforcement beam member comprises:
a base beam fixed onto the base plate; and
a pair of sidewall beams extending and protruding from two opposite ends of the base beam based on the second direction toward one side based on the third direction further than the base beam,
wherein at least a part of an outer surface of the side wall of the second support bracket is disposed adjacent to and faces an inner surface of the sidewall beam, and
wherein at least a part of an outer surface of the side wall of the first support bracket is disposed adjacent to and faces the inner surface of the sidewall beam.

21. The battery pack of claim 20, wherein the fixing member of the second support bracket is fixed to one end of the base beam based on the third direction, and the fixing member of the first support bracket is fixed to one end of the sidewall beam based on the third direction.

22. The battery pack of claim 15, wherein a length in the first direction of a pair of second bus bars accommodated in the second bus bar accommodation space defined by the isolation wall of the second support bracket is longer than a length in the first direction of a pair of first bus bars accommodated in the first bus bar accommodation space defined by the isolation wall of the first support bracket, and
wherein the second support bracket is singly and additionally installed at another position on the reinforcement beam member based on the first direction without the first support bracket and additionally supports the pair of second bus bars.

23. A battery pack provided with the support bracket of any one of claims 1 to 13.

24. A vehicle equipped with the battery pack of claim 23.

25. A vehicle equipped with the battery pack of any one of claims 14 to 22.
